# EUROPÄISCHE PATENTSCHRIFT

(11) **EP 0 502 254 B1**
(45) Veröffentlichungstag und Bekanntmachung des Hinweises auf die Patenterteilung: **21.04.1999**
(21) Anmeldenummer: 91121458.3
(22) Anmeldetag: 14.12.1991
(51) Int. Cl.: A01B 13/06, A01B 39/16

(54) **Umkehrbares Gerät zur Bodenbearbeitung zwischen Pflanzen**
Reversible device for working between plants
Outil interceps réversible

(30) Priorität: 20.12.1990 DE 4040843
(43) Veröffentlichungstag der Anmeldung: 09.09.1992
(73) Patentinhaber: Belhomme, Gérard, D-54516 Wittlich (DE)
(72) Erfinder: Belhomme, Gérard, D-54516 Wittlich (DE)
(74) Vertreter: Hennicke, Albrecht, Dipl.-Ing.

(56) Entgegenhaltungen:
- FR-A- 2 176 602
- FR-A- 2 555 860
- FR-A- 2 590 440
- FR-A- 2 596 245

## Beschreibung

Die Erfindung bezieht sich auf ein Gerät , welches insbesondere zur Bodenbearbeitung zwischen den Pflanzen in Reihenkulturen (z.B. Weinberge , Obstplantagen etc. eingesetzt wird, dessen Besonderheit ist , an der einen oder der anderen Seite eines landwirtschaftlichen Fahrzeuges o.dergl. angebaut werden zu können,um die Arbeit auf der einen oder der anderen Seite einer Reihe zu ermöglichen.

Es sind bereits verschiedene Ausführungsformen von Geräten zur Pflege zwischen den Pflanzen in Reihenkulturen bekannt: DE.Offenlegungsschrift Nr .1557780 , FR.Patent Nr.7210468 , Fr.Patentanmeldung Nr.8516396 und Nr.29452,Fr.Patent Nr.801644, Fr.Patentanmeldung Nr.8604404 , DE. Offenlegungsschrift P 25 10 223.2,usw...

Bei derart bekannten Geräten steuert ein Taster mit Hilfe einer Steuervorrichtung und eines Antriebsorgans die Schwenkbewegung eines Werkzeuges , das am unteren Ende einer Welle, die an einen Rahmen gebaut ist , befestigt ist .Beim Berühren einer Pflanze wird die Kraftwirkung des Antriebsorganes abgeschaltet , sodaß das Werkzeug entgegen der Vorschubrichtung des Fahrzeuges um die Pflanze herumschschwenken und diese umgehen kann.Ein Rückzugsmechanismus verstärkt das Einschwenken des Werkzeuges in seine Ruhestellung parallel zur Reihe.

Aus wirtschaftlichen Gründen sind diese Geräte häufig paarweise an einem landwirtschaftlichen Fahrzeug o.dergl.befestigt, um gleichzeitig je eine Reihe rechts und eine Reihe links zu bearbeiten. Um das Werkzeug in seine Arbeitslage zu bringen, drehen bei paarweiser Anordnung der Geräte die Wellen dieser Geräte in umgekehrter Richtung.Dadurch bedingt haben die bisher bekannten Geräte je nachdem , ob sie rechts oder links montiert sind, einen anderen Aufbau mit unterschiedlichen Teilen;es sind zwei unterschiedliche Geräte.

Des weiteren besitzen diese Geräte einen offenen Rahmen,wodurch die Antriebs- und Kraftübertragungselemente offen liegen und dementsprechend nicht gegen Staub ,Steine, Triebe usw.geschützt sind.

Dazu erfolgt , bei den bekannten Geräten , die Umwandlung der Kraft von der Längsbewegung des Kolbens in die Drehbewegung der Welle über einen Kurbelantrieb , bei dem der Kolben über eine feste Verbindung mit den Kurbelarm verbunden ist . Dies verhindert eine kompakte Bauweise des Gerätes.

Der Erfindung liegen die Ideen zugrunde, ein umkehrbares, kompaktes Gerät mit einem geschlossenen Gehäuse herzustellen. Der Erfindung liegen demzufolge die Aufgaben zugrunde ,ein Gerät zu entwickeln, bei dem :
ein und dasselbe Gerät,mit all seinen Teilen sowohl rechts als auch links verwendbar ist, um die Produktions- und Lagerkosten zu senken , die empfindlichen Bauteile des Gerätes in einem allseitig geschlossenen Gehäuse untergebracht sind,um die Störanfälligkeit des Gerätes herabzusenken, und die Anordnung und die Verbindung der Bauteile eine kompakte Form ermöglicht,um ein leichteres Einsetzen des Gerätes am landwirtschaftlichen Gerät zu ermöglichen.

Bei der vorliegenden Erfindung besteht das Gerät aus dem Gegenstand des Anspruchs 1. Besondere Ausführungsarten werden in den abhängigen Ansprüchen definiert.

Weitere Einzelheiten und Vorteile eines erfindungsgemäßen Gerätes ergeben sich aus der folgenden Beschreibung eines Ausführungsbeispiels mit Bezug auf die beigefügte Zeichnungen:

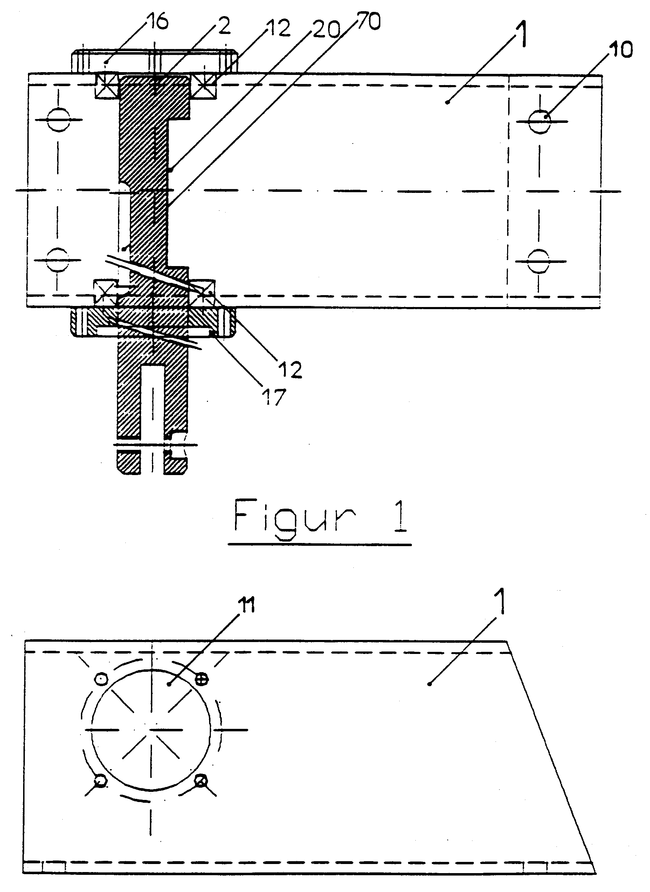

- Fig. 1 Gehäuse und Welle

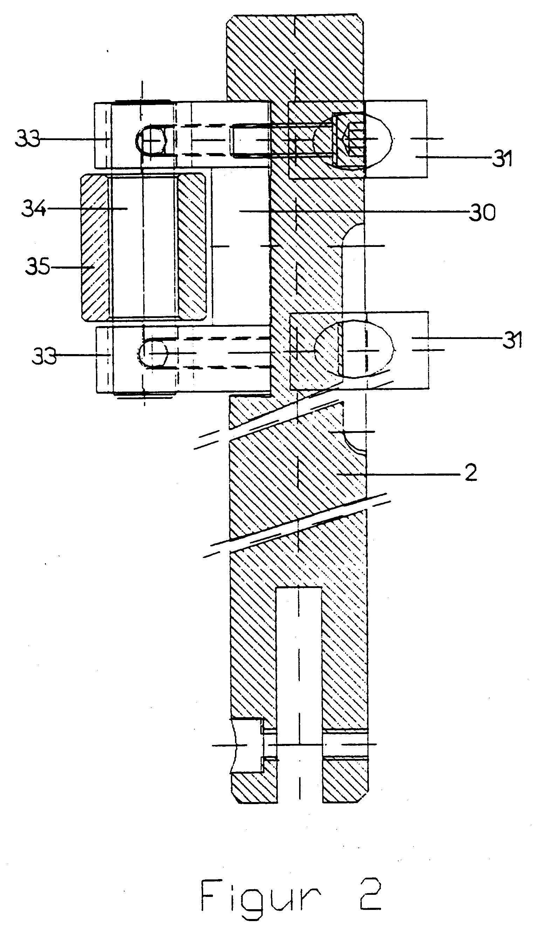

- Fig. 2 Welle mit Kraftübertragungsmechanismus

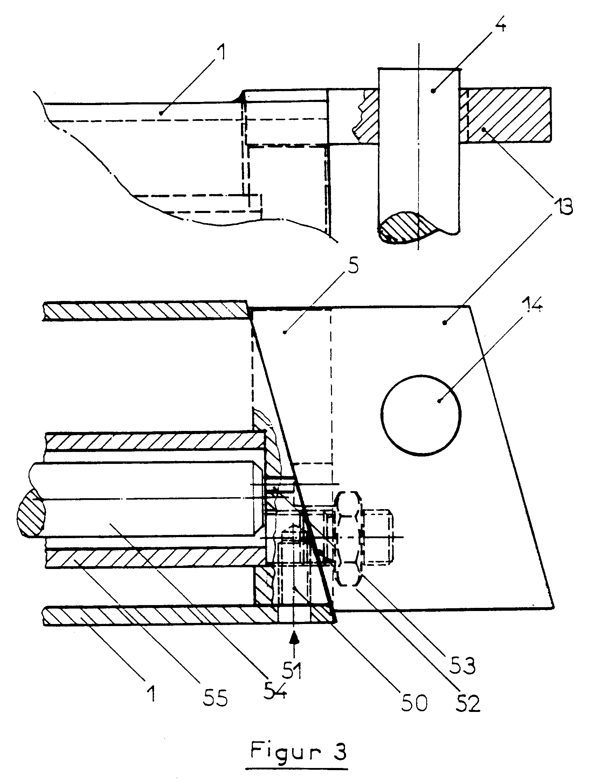

- Fig. 3 Vorderteil des Gehäuses

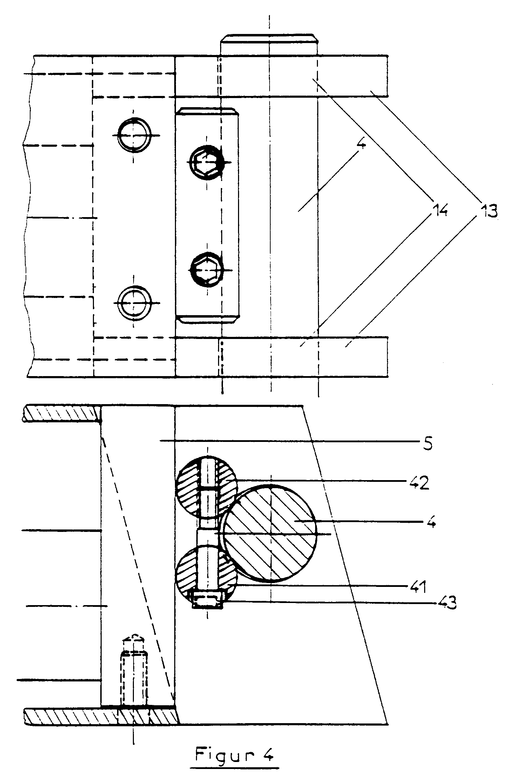

- Fig. 4 Klemmvorrichtung
- Fig. 5 Antriebsorgan
- Fig. 6 Rückzugsmechanismus
- Fig. 7 Scharbefestigung

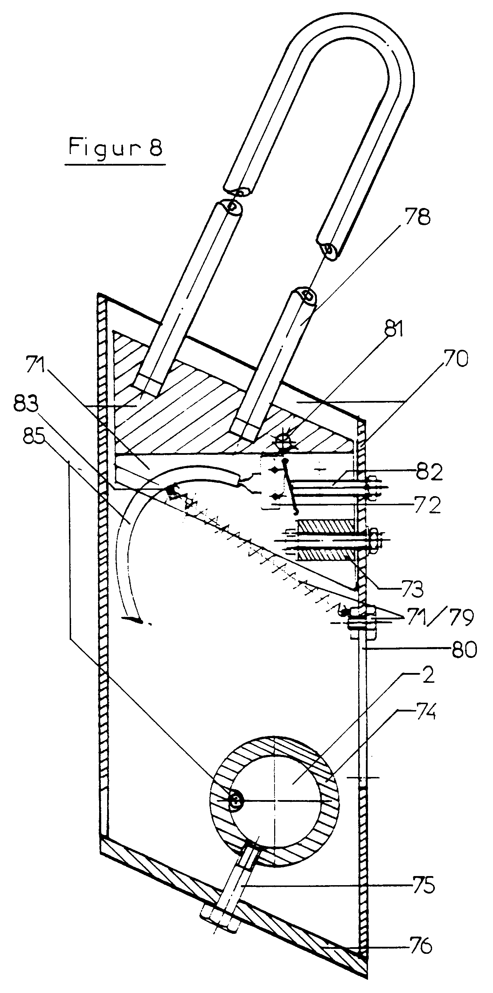

- Fig. 8 Steuervorrichtung

### Fig.1

Bei einer besonderen Ausführungsform der Erfindung besteht das Gehäuse (1) aus einem Vierkantrohr , an dessen Befestigungseite vier horizontale Bohrungen (10) angebracht sind , die zur Befestigung des Gerätes an einem Landwirschaftlichen Fahrzeug o.dgl. dienen . An den horizontalen Wandungen des Gehäuses befinden sich zwei konzentrische , vertikale Bohrungen (11) , deren Achse außerhalb der Symmetrieachse des Rohres entgegen -gesetzt zur Befestigungsseite angeordnet sind . In diese vertikalen Bohrungen sind zwei Kugellager (12) eingepreßt die als Führungs- und Drehelemente für die sich darin befindende Welle (2) dienen.Der Teil der Welle,der im Gehäuse sitz, weist ein Einfräsung (20) auf,die die Aufgabe hat,eine formschlüssige Verbindung mit der Antriebsgabel (30) einzugehen , und einer Längsnut (70) in die ein Kabel der Steuervorrichtung eingeführt ist . An der oberen und unteren Wandung befinden sich zwei auswechselbare Flansche (16,17) . Der Flansche (17) der unteren Wandung weist eine Öffnung auf,durch die die Welle (2) läuft.

### Fig.2

Der Kraftübertragungsmechanismus besteht aus der Antriebsgabel (30), zwei Klemmstücken (31) , die mit Hilfe von vier Zylinderschraube (32) fest mit der Welle ( 2 ) verspannt sind . In den beiden Hebeln der Antriebsgabel (30) befinden sich zwei konzentrische Bohrungen (33) ,durch die ein Bolzen (34) vertikal gesteckt ist ,auf dem eine Rolle (35) drehbar gelagert ist.

### Fig.3

Vorteilhaftweise ist die vordere , in einem bestimmten Winkel zur Längsachse des Rohres geschnittene Stirnseite mit zwei Halterungsplatten (13) auf Stoß mit der oberen und unteren Wandung des Rohres verschweißt . Diese Halterungsplatten (13) weisen zwei senkrechte Bohrungen (14) auf,um ein Vorwerkzeug(4) aufzunehmen .Weiterhin dienen diese Halterungsplatten (13) zur horizontalen Zentrierung der Endplatte (5) . Diese Endplatte(5) schließt die Vorderseite des Vierkantrohres senkrecht zu den vier Wandungen . Die beiden waagerechten Gewindegrundlöcher (50) der Endplatte (5) dienen zur Aufnahme von zwei Schrauben (51),die diese Endplatte mit dem Gehäuse (1) an dessen Innenseite befestigen.An der gegenüberliegenden Seite findet die Innenseite der Endplatte (5) seinen Anschlag an der senkrechten Stirnkante des Vierkantrohres.Weiterhin besitzt die Endplatte (5) zwei waagerechte Bohrungen (52, 53) , die in das Innere des Zylinderrohres (55) hineinragen.Die größere Gewindebohrung (52) dient zur Aufnahme eines Druckschlauches, in die andere Gewindebohrung (53) wird ein Gewindestift eingeschraubt, der den Endanschlag des Plungers (54) einstellt.

### Fig.4

Der Rundstab des Vorwerkzeuges(4) sitzt lose,drehbar und höhenverstellbar in den beiden Bohrungen (14) der Halterungsplatten (13). Dieser Rundstahl wird mit einer Klemmvorrichtung kraftschlüssig verbunden.

Die Klemmvorrichtung besteht aus zwei parallel zueinander verlaufenden senkrechten Klemmrollen(41,42) , die über zwei waagerechte Spannschrauben (43) miteinander verbunden sind . Durch Drehen der beiden Spannschrauben (43) bewegen sich die beiden Klemmrollen (41,42) aufeinander zu . Dadurch wird auf der einen Seite der Rundstab des Vorwerkzeuges(4) in den beiden Bohrungen der Halterungsplatten (13) festgeklemmt und auf der gegenüberliegenden Seite wird die Endplatte (5) auf den Anschlag der senkrechten äußeren Gehäusekante angepreßt.

### Fig.5

Die Endplatte (5) dient gleichzeitig als feste , horizontale, parallel zur Symetrieachse der Vierkantrohres verlaufende Führung und gleichzeitig als Verschluß für das Zylinderrohr (55). Am anderen Ende ist das Zylinderrohr (55) in der Bohrung der Zentrierplatte (15) , die an den senkrechten Innenwänden des Gehäuses senkrecht verschweißt ist,angebracht.Diese Zentrierung des Zylinderrohres (55) durch die Bohrung in der Zentrierplatte (15) verläuft zum einen aus der horizontalen Sicht gesehen durch die Symmetrieachse des Vierkantrohres (1),zum anderen, von oben betrachtet,zwischen der Symmetrieachse des Vierkantrohres (1) und der Wandung an der Befestigungsseite . Durch die gleiche Bohrung der Zentrierplatte (15) verläuft der Plunger (54),dessen Stirnseite (56) die Mantelfläche der Rolle (35) tangiert.

### Fig.6

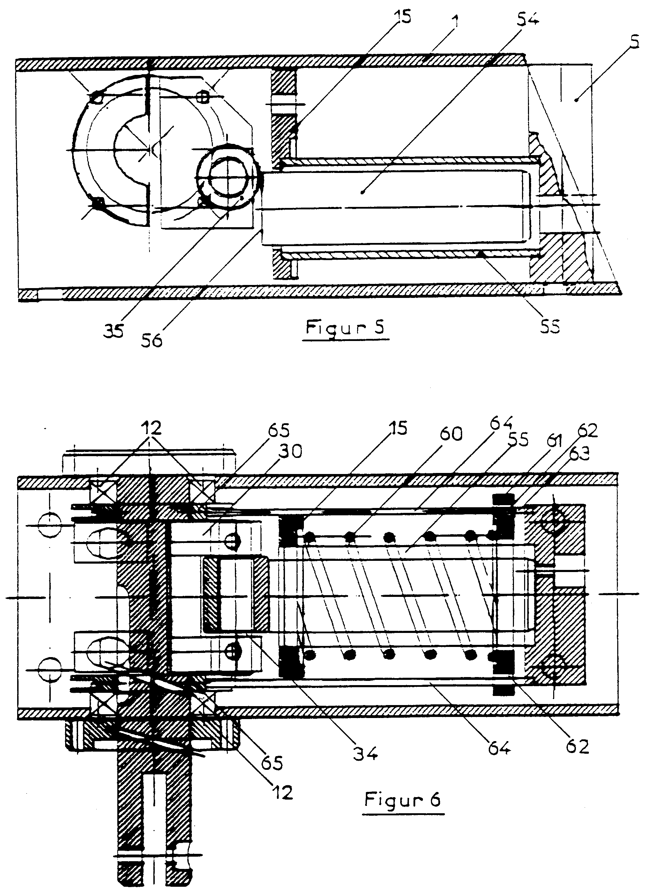

Wie Fig.6 zeigt , drückt eine an der Zentrierplatte (15) anliegende , vorgespannte Druckfeder (60),die konzentrisch um den Zylinderrohr (55) angeordnet ist, gegen eine ebenfalls konzentrisch um den Zylinderrohr (55) befindliche Spannplatte (61). Diese Spannplatte (61) besitzt zwei durchgehende Bohrungen (62) ,in die die Gewinde-endstücke (63) des Drahtseiles(64) mit je zwei Muttern befestigt sind . Das sich in den Endstücken (63) befindliche Drahtseil (64) verläuft aus der horizontalen Sicht betrachtet parallel und symmetrisch zur Symmetrieachse des Zylinders . Von oben gesehen vertaufen beide Drahtseilenden in einer horizontalen Ebene , die durch die Symmetriachse des Zylinderrohres (55) verläuft. Dies wird erreicht durch die beiden Führungsrollen (65), die als Umlenkrollen für das Drahtseil und gleichzeitig als Distanzscheiben zwischen Antriebsgabel (30) und Kugellager (12) fungieren.Durch die ausgewählte Größe des Durchmessers der Führungsrolle (65) hat sie zudem die Aufgabe den Rottenbolzen (34) gegen achsiale Verschiebung zu sichern.

### Fig.7

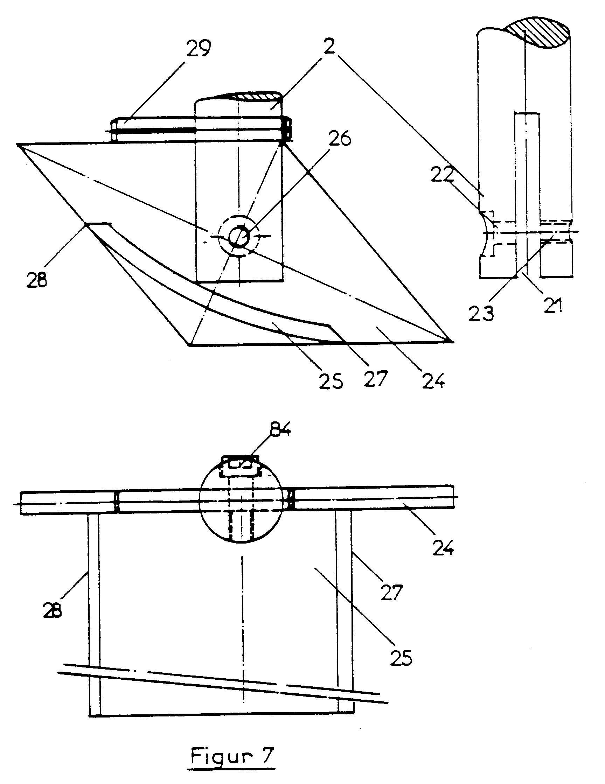

Fig.7 zeigt den nach unten ragenden Teil der Welle (2),und eine Klemmvorrichtung,die zur Befestigung eines Arbeitswerkzeuges dient.Durch die Symmetrieachse der Welle (2) verläuft von unten ein Schlitz (21). Die Endfläche des Schlitzes steht beidseitig, senkrecht in der Symmetrieachse der Welle . Zwischen der End-Fläche des Schlitzes und der Oberkante der Scharplatte (24) befindet sich eine Spannhülse(29).

Senkrecht zur Innenseite des Schlitzes (21) verläuft auf der einen Seite eine Bohrung(22) , auf der anderen Seite , in der gleichen Achse , ein durchgehendes Gewindeloch (23). Eine rautenförmige Scharplatte (24) an die der Schar (25) senkrecht befestigt ist , wird in den Schlitz (21) eingesetzt. Der Schar (25)ist an der Scharplatte(24) derart angeordnet, daß eine Ebene, die durch die beiden gegenüberliegenden Schneiden (27,28) verläuft , parallel zur längeren Symmetrieachse der Scharplatte (24) , und symmetrisch zur kürzeren Symmetrieachse der Scharplatte (24) ist . Eine Bohrung (26) befindet sich in einem bestimmten Abstand oberhalb der längeren Symmetrieachse der Raute und symmetrisch in der kürzeren Symmetrieachse der Raute.Die Schraube (84) verbindet beide Bauteile des Arbeitswerkzeuges miteinander.

### Fig.8

Die Tastervorrichtung besteht aus einem geschlossenen , quaderförmigen , umkehrbaren Tastergehäuse (70) , dessen Stirnseiten parallel zueinander abgeschrägt sind,und in der sich eine drehbare Tasterhalterung (71), ein Schalter (72), an den ein Kabel (85)angeschlossen ist , ein einstellbares Dämpfungsorgan (73), und eine einstellbare Rückzugsvorrichtung befinden. An den großen und horizontalen Wandungen des Tastergehäuses (70),befinden sich zwei konzenztrische Bohrungen, die außerhalb der Längssymmetrieachse des Tastergehäuses (70)liegen,und durch die die Welle (2) eingeführt ist. Das Tastergehäuse (70),dessen Höhen und Drehrichtung einstellbar sind , ist mittels einer Klemmvorrichtung,bestehend aus einem zylindrischen Ring (74) Spannschraube (75) und einer Druckplatte (76) an der Welle (2) befestigt. Der Ring (74),der ein radiales Gewindeloch aufweist, ist mittels der Spannschraube (75) mit der Druckplatte (76),die das eine Ende des Tastergehäuses (70) schließt,verspannt. Eine zweite parallele Bohrung dient zur Aufnahme eines Bolzens (81), der als Drehachse für die drehbare Tasterhalterung(71) fungiert.An einer der kleineren Wandungen des Gehäuses befinden sich drei nebeneinanderliegende Bohrungen , wobei eine Bohrung ein Langloch (80) ist und eine andere Bohrung ein Gewinde besitzt.Das Langloch (80) dient als Einstellvorrichtung für die Rückzugsvorrichtung der Tasterhalterung (71).Je nachdem, wo die Schraube mit der Mutter im Langloch befestigt ist, ändert sich die Zugspannung der Rückzugfeder (79) . In der Gewindebohrung befindet sich ein Gewindestift (82) , der als Schaltpunkt für den Schalter (72) dient.In der dritten Bohrung ist eine Schraube mit einer Mutter befestigt, um dessen Schaft sich ein Zylinderrohr (73)befindet,das als Dämpfungselement fungiert. Die Tasterhalterung (71) besteht aus einem parallelogrammförmigen Quader , in dessen horizontale Symmetrieachse ein Schlitz eingefräst ist.Dieser Schlitz , der senkrecht zur Drehachse der Tasterhalterung (71) angeordnet ist , dient erstens zu Aufnahme des Schalters (72),der mit zwei senkrecht zum Schlitz angeordneten Schrauben befestigt ist,sowie zweitens als gabelförmiger Freiraum für die Rückzugsfeder (79).

Desweiteren haben die beiden Innenflächen des Schlitzes die Aufgabe , eine Bremsfläche für das Zylinderrohr (73) zu bilden. In der gleichen Ebene des Schlitzes , jedoch auf der gegenüberliegenden Seite,befinden sich zwei Bohrungen ,in die die beiden Enden eines U-förmigen Tasters(78),der aus einem Kunststoffrohr besteht, eingesteckt sind. Senkrecht zu den großen Außenflächen der parallelogrammförmigen,quaderförmigen Tasterhalterung (71) befindet sich eine Bohrung , die als Rotationsführung für den Bolzen(81)dient.Parallel zur Rotationsachse befindet sich eine weitere Bohrung,in der ein Stift(83) eingeführt ist,an den die Rückzugfeder (79)eingehängt wird.

## Patentansprüche

1. An ein landwirtschaftliches Gerät, Fahrzeug od.dgl. anbaubares Gerät, welches insbesondere zur Bodenbearbeitung zwischen in Reihenkulturen angeordneten Pflanzen eingesetzt wird, mit
- einer Befestigungsvorrichtung zur Befestigung des Gerätes an dem landwirtschaftlichen Gerät oder Fahrzeug;
- einer Welle (2) mit einem daran befestigten, schwenkbaren Werkzeug (25);
- einem Antriebsorgan (54), mit einem Kraftübertragungsmechanismus (30, 35), welches die Welle (2) dreht und das daran befestigte Werkzeug (25) aus einer unwirksamen Stellung in eine Arbeitsstellung schwenkt;
- einem mit einem Rückzugsorgan versehenen Rückzugsmechanismus (60, 64, 65) zum Zurückschwenken des Werkzeuges (25) aus seiner Arbeitsstellung in seine unwirksame Stellung;
- einer Steuervorrichtung für den Antrieb der Welle;
**dadurch gekennzeichnet, daß** das Werkzeug (25) und die Steuervorrichtung auf beiden Seiten des landwirtschaftlichen Gerätes benutzbar sind, daß das Gerät ein von der Welle (2) durchquertes, geschlossenes und umkehrbares Gehäuse (1) aufweist, in dessen Innerem das Antriebsorgan (54), der Kraftübertragungsmechanismus (30, 35) und der Rückzugsmechanismus symmetrisch zu einer Mittelebene angeordnet sind, die durch mindestens eine Symmetrieachse des Gehäuses (1) verläuft, und daß die Welle (2) durch die eine oder die andere horizontale Wand des Gehäuses (1) in dieses einführbar ist, und daß der Kraftübertragungsmechanismus (30, 35) mindestens ein Rollorgan (35) aufweist, und daß das Rückzugsorgan um ein zum Antriebsorgan (54) gehöriges Zylinderrohr (55) angeordnet ist und daß die Steuervorrichtung (70, 71, 76, 78) ein Steuergehäuse (70) und eine umkehrbare Tastervorrichtung aufweist.

2. Gerät nach Anspruch 1, **dadurch gekennzeichnet**, **daß** das Gehäuse (70) der Steuervorrichtung derart mit der Welle (2) verbunden ist, daß es um die Wellenachse und in der Höhe verstellbar ist.

3. Gerät nach einem der Ansprüche 1 bis 2, **dadurch gekennzeichnet**, **daß** das Gehäuse (1) mindestens aus einem Hohlprofil besteht.

4. Gerät nach einem der Ansprüche 1 bis 3, **dadurch gekennzeichnet, daß** das Zylinderrohr (55) in einer Zentrierplatte (15) gehalten wird.

5. Gerät nach einem der Ansprüche 1 bis 4, **dadurch gekennzeichnet, daß** es mit einem Vorwerkzeug (4) versehen ist, das mindestens mittels einer Klemmvorrichtung, bestehend aus mindestens zwei zueinander verspannten Klemmrollen (41, 42), an dem Gehäuse (1) befestigt ist.

6. Gerät nach dem Anspruch 1, **dadurch gekennzeichnet, daß** die Welle (2) eine ebene Fläche (20) zur Aufnahme einer Gabel (30) besitzt, daß sie eine Nut (27) zur Aufnahme eines Kabels besitzt und daß an einer seiner Stirnseiten ein Schlitz (21) angeordnet ist, in dem eine das Werkzeug tragende Platte (24) angeordnet ist.

7. Gerät nach einem der Ansprüche 1 und 6, **dadurch gekennzeichnet, daß** der Kraftübertragungsmechanismus aus einer Antriebsgabel (30) mit zwei senkrechten, konzentrische Öffnungen (33), einer in den beiden Öffnungen (33) aufgenommenen Achse (34) und einer frei um die Achse (34) beweglichen Rolle (35) besteht, wobei die Antriebsgabel (30) mittels zweier Klemmstücke (31) und vier Schrauben (32) an der Welle befestigt ist.

8. Gerät nach einem der Ansprüche 1 bis 7, **dadurch gekennzeichnet, daß** der Rückzugsmechanismus eine Druckfeder (60) aufweist, die mittels eines Seiles (64) zwischen der Zentrierplatte (15) und einer Spannplatte (61) eingespannt ist, wobei das Seil (64) bügelförmig hinter der Antriebsgabel (30) eingehängt ist und seine beiden Enden über zwei Führungsrollen (65) laufen, die an der Spannplatte (61) befestigt sind.

9. Gerät nach einem der Ansprüche 1 und 7, **dadurch gekennzeichnet, daß** die das Werkzeug (25) tragende Platte (24) rautenförmig ausgestaltet ist und in seiner kürzeren Symmetrieachse eine Bohrung (26) aufweist und das Werkzeug in seiner Symmetrieachse gewölbt und senkrecht zur Platte (24) angeordnet ist.

10. Gerät nach Anspruch 1, **dadurch gekennzeichnet, daß** das Tastergehäuse (70) aus einem Hohlprofil besteht, in dem sich mindestens eine Tasterhalterung (71), ein Schalter (72) und eine Rückzugsvorrichtung (79) befinden.

11. Gerät nach Anspruch 1 oder 10, **dadurch gekennzeichnet, daß** der Taster (78), als Teil der Steuervorrichtung, U-förmig gebogen ist und daß seine beiden Enden mit dem Tasterhalter verbunden sind.

## Claims

1. Apparatus attachable to an agricultural machine, vehicle or the like, particularly for the purposes of soil peparation between plants arranged in a row-crop pattern, comprising
- an attachment device for attaching the apparatus to an agricultural machine or vehicle;
- a shaft (2) having a pivotable implement (25) attached thereto;
- a drive unit (54) which comprises a power transmission mechanism (30,35) and operates to turn the shaft (2), thereby pivoting the implement (25) attached to said shaft from an inoperative position to a working position;
- a retraction mechanism (60, 64, 65) comprising a retraction member for pivoting the implement (25) back from its working position into its inoperative position;
- a shaft drive control device.
**characterized in that** the implement (25) and the control device are usable on either side of the agricultural apparatus; that said apparatus comprises a closed reversible housing (1) through which the shaft (2) passes, said housing containing in its interior the drive unit (54), the power transmission mechanism (30,35) and the retraction mechanism, all arranged symmetrically to a central plane coinciding with at least one axis of symmetry of said housing; that said shaft (2) can be introduced into the housing (1) through one or the other horizontal wall of said housing; that the power transmission mechanism (30,35) comprises at least one rolling member (35); that the retraction member is arranged around a cylindrical tube (55) forming part of the drive unit; and that the control device (70,71,76,78) comprises a control housing (70) and a reversible sensing device.

2. Apparatus as claimed in claim 1, **characterized in that** the housing (70) of the control device is connected to the shaft (2) in a manner allowing its position about the shaft axis, as well as its height, to be adjusted.

3. Apparatus as claimed in any of claims 1 through 2, **characterized in that** said housing (1) comprises at least one hollow section.

4. Apparatus as claimed in any of claims 1 through 3, **characterized in that** said cylindrical tube (55) is held in a centralizing plate (15).

5. Apparatus as claimed in any of claims 1 through 4, **characterized in that** it comprises a pre-implement (4) attached to the housing (1) at least via one clamping device, said clamping device consisting of at least two clamping rollers (41,42) biased to exert a clamping force between them.

6. Apparatus as claimed in claim 1, **characterized in that** the shaft (2) comprises a planar portion (20) for accomodating a fork (30) and a groove (27) for accomodating a cable, and that on one of its front faces there is provided a slot (21) in which there is arranged a plate (24) carrying the implement.

7. Apparatus as claimed in any of claims 1 through 6, **characterized in that** the power transmission mechanism comprises a driving fork (30) having two vertical, concentrically arranged openings (33), an axle supported in said two openings (33), and a roller (35) freely displaceable about said axle (34), said driving fork (30) being attached to the shaft via two clamping members (31) and four bolts (32).

8. Apparatus as claimed in any of claims 1 through 7, **characterized in that** the retraction mechanism comprises a compression spring (60) clamped by means of a rope (64) between the centralizing plate (15) and a tensioning plate (61), said rope (64) being engaged behind the drive fork (30) in a stirrup-shape arrangement, with its two ends running over two guide rollers (65) attached to the clamping plate (61).

9. Apparatus as claimed in any of claims 1 through 7, **characterized in that** the plate (24) carrying the implement (25) is lozenge-shaped and comprises a bore in its shorter axis of symmetry, and that the implement is curved in its axis of symmetry and arranged in a direction vertical to the plate (24).

10. Apparatus as claimed in claim 1, **characterized in that** the sensor housing (70) consists of a hollow section in which there are arranged at least one sensor holder (71), a switch (72), and a retraction device (79).

11. Apparatus as claimed in claim 1 or claim 10, **characterized in that** the sensor (78), forming part of the control device, is bent into a U-shaped form, and that its two ends are connected to the sensor holder.

## Revendications

1. Appareil, adaptable sur véhicule ou autre matériel agricole ou similaire utilisé plus particuliérement pour le travail du sol entre les plants de plantations en lignes comprenant:
- un dispositif de fixation pour fixer l'appareil sur un véhicule ou autre matériel agricole
- un arbre (2) duquel est rendu solidaire un outil (25) pivotant,-
- un organe d'entrainement (54) montrant un mécanisme (30,35) de transfert de force permettant de faire pivoter l'arbre (2) et l'outil (25) qui lui est solidaire d'une position inactive vers une position de travail,
- un mécanisme de rappel (60,64,65) pourvu d'un organe de rappel permettant le retour de l'outil (25) de sa position de travail vers sa position inactive,
- un dispositif de commande pour l'entrainement de l'arbre;
caractérisé en ce que
l'outil (25) et le dispositif de commande sont utilisable des deux côtes du matériel agricole, que l'appareil présente, traversé par l'arbre (2), un boitier fermé et réversible à l'intérieur duquel l'organe d'entrainement (54), le mécanisme de transfert de force (30,35) et le mécanisme de rappel sont symétriquement positionnés par rapport à un plan median qui passe au moins par l'un des axes de symétrie du boitier (1), que l'arbre (2) est insérable à travers l'une ou l'autre paroie horizontale du boitier (1), que le mécanisme de transfert de force (30,35) présente au moins un organe roulant (35), que l'organe de rappel est placé autour d'un tube cylindrique (55) appartenant à l'organe d'entrainement (54), et que le dispositif de commande (70,71,76,78) présente un boitier de commande (70) et un dispositif de commande réversible.

2. Appareil selon la revendication 1 **caractérisé** en ce que le boitier (70) du dispositif de commande est assemblé à l'arbre (2) de manière à pouvoir être réglé en hauteur et autour de l'axe de l'abre.

3. Appareil selon la revendication 1 **caractérisé** en ce que le boitier est constitué au moins d'un profilé tubulaire.

4. Appareil selon l'une des revendications 1 à 3 **caractérisé** en ce que le tube cylindrique (55) est maintenu dans une platine de centrage (15).

5. Appareil selon l'une des revendications 1 à 4 **caractérisé** en ce qu'il est pourvu d'un outil auxiliaire (4) fixé au boitier (1) au moyen d'un dispositif de serrage constitué au moins de deux brides cylindriques (41,42) serrées l'une vers l'autre.

6. Appareil selon l'une des revendications 1 à 5 **caractérisé** en ce que l'arbre (2) posséde une surface plane (20) pour placer une fourche (30), qu'il présente une rainure (70) afin de recevoir un câble et qu'à l'une de ses extrémités est prévue une mortaise (21) dans laquelle est placée la plaque support d'outil (24).

7. Appareil selon l'une des revendications 1 à 6 **caractérisé** en ce que le mécanisme de transfert de force comprend une fourche d'entrainement (30) qui présente deux orifices (33) verticaux et concentriques, un axe (34) logé dans ces deux orifices, un galet (35) monté libre en rotation autour de l'axe, et que la fourche d'entrainement (30) est fixée à l'arbre au moyen de deux éléments de serrage 831) et de quatre vis (32).

8. Appareil selon l'une des revendications 1 à 7 **caractérisé** en ce que le mécanisme de rappel comprend un ressort (60) qui, placé entre la plaque de centrage (15) et une plaque de tension (61), est maintenu en pression au moyen d'un câble (64) de forme cintrée, accroché derriére la fourche d'entrainement (30), et dont le deux extrémités passées autour de deux poulies de guidage (65) sont fixées à la plaque de tension (61).

9. Appareil selon l'une revendications 1 et 8 **caractérisé** en ce que la plaque (24) portant l'outil (25) est en forme de losange qui montre sur son axe de symetrie de plus petit un orifice (26), que l'outil est perpendiculaire à la plaque (24), et qu'il est cintré selon son axe de symétrie.

10. Appareil selon la revendication 1 **caractérisé** en ce que le boitier de palpeur (70) est constitué d'un profilé tubulaire dans lequel se trouve au moins un support de palpeur (71), un contacteur (72) et un dispositif de rappel (79).

11. Appareil selon l'une des revendications 1 ou 10 **caractérisé** en ce que le palpeur (78), partie du dispositif de commande, est pliée en forme de "U" et que ses deux extrémités sont fixées au support de palpeur.
